# EUROPEAN PATENT SPECIFICATION

(11) **EP 3 330 102 B1**
(45) Date of publication and mention of the grant of the patent: **18.12.2019**
(21) Application number: 16832489.5
(22) Date of filing: 25.07.2016
(51) Int. Cl.: B60C 11/03

(54) **PNEUMATIC TIRE FOR MOTORCYCLES**
LUFTREIFEN FÜR MOTORRÄDER
PNEU POUR MOTOCYCLETTES

(30) Priority: 31.07.2015 JP 2015152751; 31.07.2015 JP 2015152742
(43) Date of publication of application: 06.06.2018
(73) Proprietor: Bridgestone Corporation, Tokyo 104-8340 (JP)
(72) Inventor: KAJIMOTO, Katsuhiko, Tokyo 104-8340 (JP)
(74) Representative: Oxley, Robin John George
(86) International application number: PCT/JP2016/003452
(87) International publication number: WO 2017/022206

(56) References cited:
- WO-A1-2008/124899
- WO-A1-2011/041859
- WO-A1-2015/045723
- WO-A2-2013/046004
- JP-A- H11 192 814
- JP-A- S63 212 105
- JP-A- 2007 283 803
- JP-A- 2012 176 680
- JP-A- 2014 080 109
- JP-A- 2014 205 395

## Description

### TECHNICAL FIELD

This disclosure relates to a motorcycle pneumatic tire.

### BACKGROUND

Conventionally, in a motorcycle pneumatic tire (for example, see JP2000-158910A (PTL1)), particularly during running in a state applied with a comparatively heavy load, deterioration of durability of the tire due to occurrence of breakage at belt edges or ply edges has been a problem. Attention is drawn to the disclosures of WO2013/046004, WO2015/045723, WO2008/124899, WO2011/041859, JP2014-205395, JP2012-176680 and JP2014-080109.

### CITATION LIST

### Patent Literature

PTL1: JP2000-158910A

### SUMMARY

### (Technical Problem)

We discovered that the reason of such breakage of belt edges or ply edges is that during running, the temperature inside the tire in the vicinity of contact edges of the tire, at which the belt edges or ply edges are ordinarily located, is raised, and discovered that acceleration of heat dissipation in such portion is effective for improvement of the durability of the tire.

Therefore, in order to improve the durability of the tire, it is regarded as effective to dispose a recess such as a groove for heat dissipation in the vicinity of the contact edges, to thereby decrease the temperature inside the tire in the vicinity of the contact edges. However, if a recess is disposed in the vicinity of the contact edges, there is a risk that steering stability of the tire is deteriorated.

Then, this disclosure aims to provide a motorcycle pneumatic tire with improved durability while maintaining the steering stability of the tire.

### (Solution to Problem)

The present invention provides a motorcycle pneumatic tire as claimed in claim 1.

Here, the "applicable rim" is a valid industrial standard for the region in which the tire is produced or used, and refers to an approved rim of an applicable size (the "Measuring Rim" in the STANDARDS MANUAL of ETRTO (the European Tyre and Rim Technical Organization in Europe), and the "Design Rim" in the "YEAR BOOK" of TRA (the Tire and Rim Association, Inc.)) according to the "JATMA Year Book" of the JATMA (Japan Automobile Tire Manufacturers Association) in Japan, the "STANDARDS MANUAL" of ETRTO in Europe, or the "YEAR BOOK" of TRA in the United States of America.

Moreover, the "prescribed internal pressure" refers to an air pressure in accordance with the maximum load capability corresponding to the maximum load capability of the applicable size/ply rating described by the aforementioned JATMA, etc. The "maximum load capability" refers to the maximum mass that the tire is allowed to bear according to the aforementioned standards.

Note that the "negative ratio" refers to the ratio of the recess area within the intermediate region to the area of the tread surface of the intermediate regions {(recess area / tread area) × 100 (%)}.

In the present Specification, the "circumferential groove extending in the tire circumferential direction" refers to a groove with an inclination angle with respect to the tire circumferential direction of 30° or less and with a tire circumferential length of the groove in the intermediate region of two times or more to the tire widthwise length.

In the present Specification, the "width direction groove extending in the tire width direction" refers to a groove with an inclination angle with respect to the tire width direction of 30° or less and with a tire widthwise length of the groove within the intermediate region of two times or more of the tire circumferential length.

In the present Specification, the "small hole" refers to a hole with a diameter within a range of 10 mm or more and 20 mm or less, exclusive of the aforementioned circumferential groove and width direction groove.

In the present Specification, the "pattern pitch" refers to a tire circumferential length per unit of a tread pattern repeating in the tire circumferential direction, and refers to its average length when the tire circumferential length per unit varies along the tire circumferential direction.

Note that is not specifically limited, each dimension such as the length of the circumferential groove or the width direction groove refers to one measured along the periphery of the tread surface.

### (Advantageous Effect)

According to this disclosure, it is possible to provide a motorcycle pneumatic tire with improved durability while maintaining the steering stability of the tire.

### BRIEF DESCRIPTION OF THE DRAWINGS

FIG. 1 illustrates a tire widthwise cross-sectional view of a motorcycle pneumatic tire according to one embodiment of this disclosure;
FIG. 2 illustrates a partial developed view of the tread surface of the motorcycle pneumatic tire of FIG. 1;
FIG. 3 illustrates a partial developed view of a tread surface of a motorcycle pneumatic tire according to another embodiment of this disclosure;
FIG. 4 illustrates a partial cross-sectional view of a tread surface of the motorcycle pneumatic tire according to another embodiment of this disclosure;
FIG. 5 illustrates a partial developed view of a tread surface of a motorcycle pneumatic tire, which is not according to the present invention, but which is useful for understanding the present invention; and
FIG. 6 illustrates a partial cross-sectional view of a tread surface of a motorcycle pneumatic tire, which is not according to the present invention, but which is useful for understanding the present invention.

### DETAILED DESCRIPTION

Hereinafter, by referring to the drawings, the motorcycle pneumatic tire of this disclosure (hereinafter referred to as merely "the tire") is described in details by exemplifying an embodiment thereof.

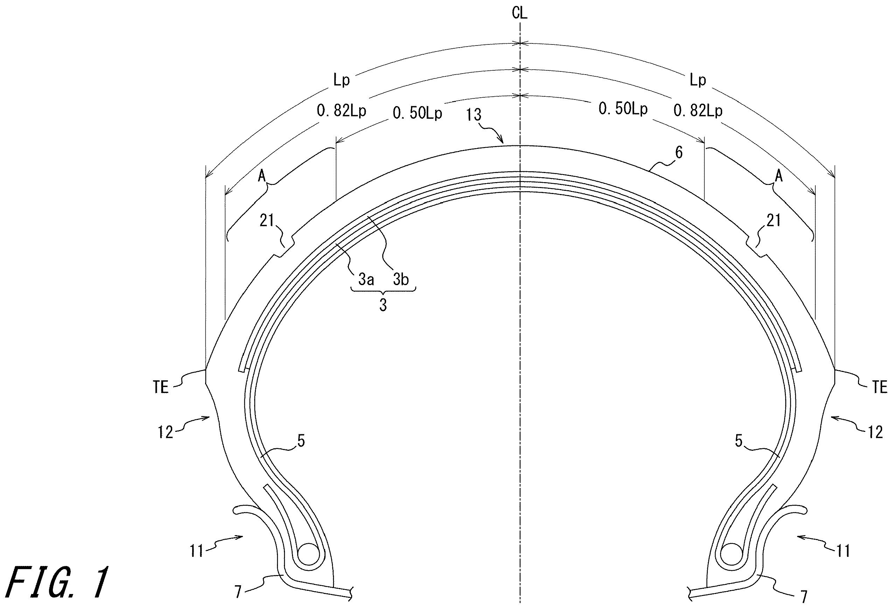

FIG. 1 illustrates a tire widthwise cross section of the tire according to the one embodiment of this disclosure in the aforementioned reference state (the state where the tire is mounted to an applicable rim, filled with a prescribed internal pressure without load applied). This tire includes a pair of sidewall portions 12 and a tread portion 13 spanning between the sidewall portions 12 on tire radial outer sides of a pair of bead portions 11, with a carcass 5 spanning between the bead portions 11 as a skeleton. Note that the carcass in the present embodiment is composed of one ply, but two or more plies may be arranged as well. Moreover, in the present embodiment, an inclined belt 3 composed of two inclined belt layers 3a, 3b is arranged on a tire radial outer side of the carcass 5 in the tread portion 13, but other belt structures may be used as well. Note that in the two inclined belt layers 3a, 3b, their cords extend in a manner inclined with respect to the tire circumferential direction, each crossing the cords in the other layer.

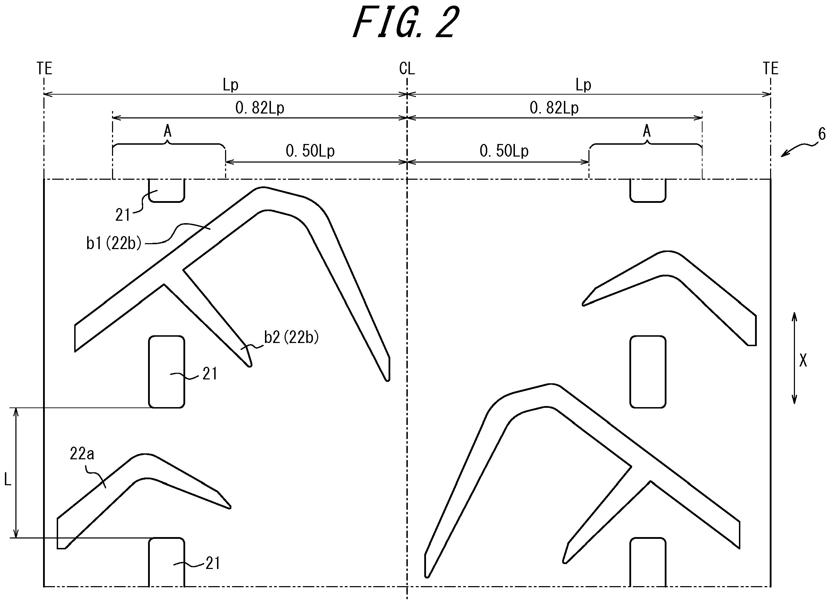

FIG. 2 illustrates a developed view of a part of the tread surface 6 of the tire of FIG. 1 according to the **present embodiment.** In the present embodiment, patterns line-symmetrical with respect to an equatorial plane CL are arranged in a manner displaced from each other in a tire circumferential direction X on both sides of the tread surface 6 divided by the tire equatorial plane CL. Therefore, the configuration of the tread surface 6 of this embodiment is described here with a tire half portion on the left side toward the page as an example.

First, in the present embodiment, when a tire widthwise region on the tread surface 6 partitioned by a tire widthwise position on the tread surface spaced, from the tire equatorial plane CL toward a tread edge TE side, by 50% of a half width Lp of a peripheral length of the tread surface along the periphery of the tread surface 6, and a tire widthwise position on the tread surface spaced, from the tire equatorial plane CL toward a tread edge TE side, by 82% of the half width Lp is defined as an intermediate region A, the intermediate region A has recesses intermittent along a tire circumferential direction (in this example, circumferential grooves 21 and lug grooves 22a, 22b). Note that in the present embodiment, the intermittently arranged circumferential grooves 21 are linear and extend along the tire circumferential direction, but the circumferential grooves 21 may also be of a bent shape, a curved shape, etc., or extend in a manner inclined with respect to the tire circumferential direction at an angle of 30° or less. Moreover, in the present embodiment, all the circumferential grooves 21 are of the same shape, but may be of different shapes as well.

Moreover, the aforementioned lug grooves 22a, 22b are formed alternately in the tire circumferential direction. More specifically, the lug grooves 22a are grooves extending in a manner inclined with respect to the tire width direction, both ends of each terminating within the tread surface 6. The grooves 22a extend in a manner inclined with respect to the tire width direction with respectively one position bent in the vicinity of its center in the extension direction. Similarly, each of the lug grooves 22b has both ends terminating within the tread surface 6, is bent at two positions in the vicinity of their centers in the extension direction. More specifically, each lug groove 22b is composed of a groove portion b1 extending in a manner inclined with respect to the tire width direction with two bent positions, and a groove portion b2 being connected to the groove portion b1 and extending in a direction different from the groove portion b1. Note that the lug grooves 22a, 22b are grooves with a groove depth larger than the aforementioned circumferential groove 21.

In this way, in the tire according to this disclosure, it is important that in a reference state mounted to an applicable rim 7, filled with a prescribed internal pressure without load applied, the intermediate regions A on both tire half portions have recesses formed intermittently along the tire circumferential direction, and the negative ratio in the intermediate regions A is 15% or more and 45% or less.

In this way, by disposing intermittently extending recesses on the intermediate regions A, a groove surface area of the intermediate regions A, which are in the vicinity of the contact edges TE and have largest heat dissipation during vehicle running, is enlarged, which enables dissipation of heat generated inside the tire and decrease of the temperature inside the tire in the vicinity of the contact edges TE. Furthermore, by increasing the groove area within the intermediate regions A, the volume of the rubber itself, which is a factor of heat dissipation, is decreased, which enables reduction of the heat dissipation itself. Therefore, it is possible to decrease the temperature inside the tire in the vicinity of the contact edges TE. As a result, it is possible to suppress occurrence of failure at belt edges and ply edges, and to improve the durability of the tire.

However, in this case, the intermittently extending recesses bring a difference in level of the rigidity in the intermediate regions A, which leads to a risk of deterioration of the steering stability. Then, in the tire according to the present embodiment, by setting the negative ratio in the intermediate regions A to 15% or more, the heat dissipation effect due to the recesses is obtained sufficiently, and by setting the same to 45% or less, the difference in degree of the rigidity is reduced, which maintains the steering stability.

As described above, the configuration according to the one embodiment of this disclosure is capable of decreasing the temperature inside the tire in the vicinity of the tread edges during heavy-load running as compared to conventional, and thereby improving the durability of the tire, while maintaining the steering stability.

Note that in the present embodiment, by disposing the aforementioned lug grooves 22a, 22b, it is possible to obtain traction performance of the tire. From the viewpoint of obtaining sufficient traction performance, it is preferable that a groove depth of the lug grooves 22a, 22b is 5 mm or more and 9 mm or less.

Note that the "groove depth" in the present embodiment is a maximum depth measured a groove opening position on the tread surface in the reference state, and the same goes with various grooves and small holes described in the following.

In the present embodiment, the lug grooves 22a, 22b extend to the vicinity of the tread ground contact edges, i.e., tire widthwise sides outer than tire widthwise outer edges of the intermediate regions A. Such configuration has a part of the tire widthwise outer sides of the lug grooves 22a, 22b constantly open outside the contact patch during normal running, which is preferable from the viewpoint of reducing pattern noise.

According to the tire of the present embodiment, it is preferable that the recesses disposed on the intermediate regions A include the circumferential grooves 21 extending in the tire circumferential direction.

Note that in the present embodiment, the circumferential grooves 21 in the present embodiment preferably have a tire circumferential length of 10 mm or more and 50 mm or less and a tire widthwise length of 5 mm or more and 15 mm or less, and are preferably disposed at a number of 20 or more and 100 or less spanning the tire circumferential direction on each of the tire half portions. Here, the number may be appropriately determined depending on a length of a groove side of the circumferential grooves 21 along the circumferential direction.

Moreover, it is preferable that a groove depth of the circumferential groove 21 is 2 mm or more and 8 mm or less.

By satisfying these ranges, it is possible to further improve the heat dissipation effect due to the circumferential grooves 21.

It is preferable that a value obtained by dividing a spacing L in the tire circumferential direction of ones of the circumferential grooves 21 adjacent in the tire circumferential direction by a pattern pitch length in the tire circumferential direction is 0.15 or more and 0.5 or less. If 0.15 or more, it is possible to appropriately maintain the spacing of the recesses in the tire circumferential direction and to further improve the steering stability, and if 0.5 or less, it is possible to improve the heat dissipation performance of the circumferential grooves 21.

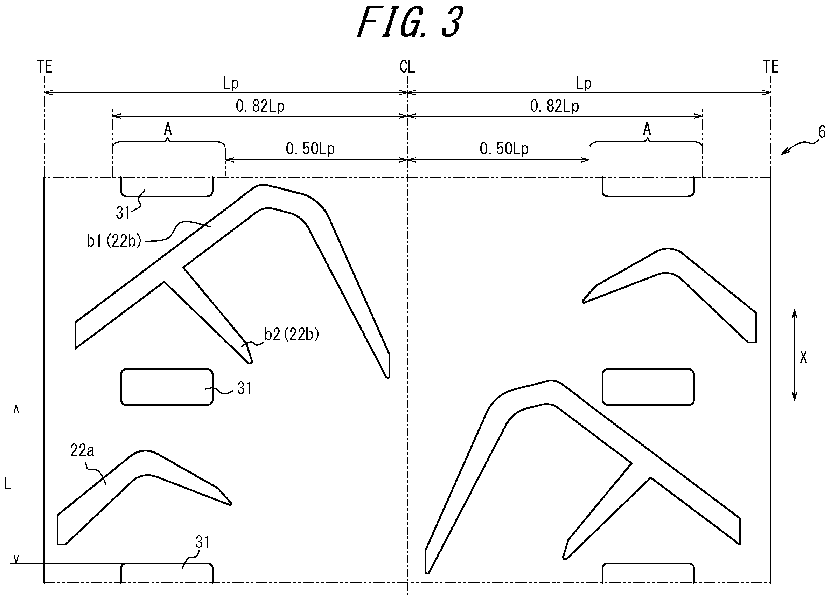

FIG. 3 illustrates a partial developed view showing a part of a tread pattern 6 of a motorcycle pneumatic tire according to another embodiment of this disclosure. Note that the configuration similar to FIG. 2 is identified with the same reference signs, its description being omitted. In the embodiment of FIG. 3, width direction grooves 31 are formed instead of the circumferential grooves 21 of FIG. 2. In this way, it is preferable that the recesses disposed on the intermediate regions A include width direction grooves 31 extending in the tire width direction.

Note that in the present embodiment, the width direction grooves 31 arranged intermittently in the tire circumferential direction are linear and extend along the tire width direction, but may also be of a bent shape, a curved shape, etc., or extend in a manner inclined with respect to the tire width direction at an angle of 30° or less. Moreover, in the present embodiment, all the width direction groove 31 are of the same shape, but may be of different shapes as well.

Note that it is preferable that the width direction grooves 31 are disposed at a number of 20 or more and 100 or less spanning the tire circumferential direction on each of the tire half portions, but this number may be appropriately determined depending on a length of a groove side of the circumferential grooves 21 along the circumferential direction.

It is preferable that a value obtained by dividing a spacing L in the tire circumferential direction of ones of the width direction grooves 31 adjacent in the tire circumferential direction by a pattern pitch length in the tire circumferential direction is 0.15 or more and 0.5 or less. If 0.15 or more, it is possible to appropriately maintain the spacing of the recesses in the tire circumferential direction and to further improve the steering stability, and if 0.5 or less, it is possible to improve the heat dissipation performance of the width direction grooves 31.

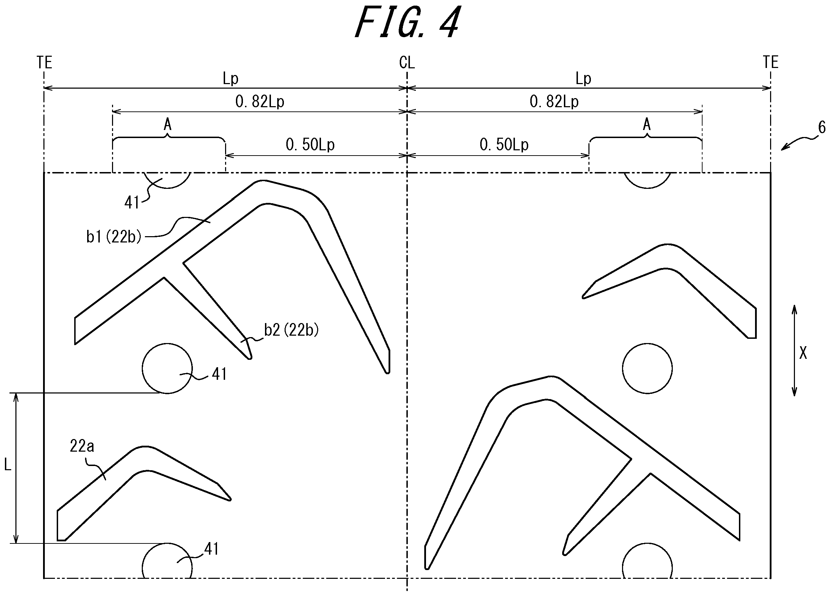

FIG. 4 illustrates a partial developed view showing a part of a tread pattern 6 of a motorcycle pneumatic tire according to another embodiment of this disclosure. Note that the configuration similar to FIG. 2 is identified with the same reference signs, its description being omitted. In the embodiment of FIG. 4, small holes 41 are formed instead of the circumferential grooves 21 of FIG. 2. In this way, it is preferable that the recesses disposed on the intermediate regions A include small holes 41.

The small holes are preferably of a circular shape with a diameter of 10 mm or more and 20 mm or less, but may also be of various shapes such as elliptical shape, rectangular shape, and a combination thereof. Furthermore, it is preferable that a groove depth of the small holes is 2 mm or more and 8 mm or less. By setting the diameter to 10 mm or more and setting the groove depth to 2 mm or more, it is possible to obtain the heat dissipation effect due to the small holes more sufficiently, and by setting the diameter to 20 mm or less and setting the groove depth to 8 mm or less, it is possible to suppress extreme deterioration of the rigidity in the intermediate regions A, and to further secure maintenance of the steering stability and suppression of uneven wear, etc.

Note that it is preferable that the small holes 41 are disposed at a number of 20 or more and 100 or less spanning the tire circumferential direction on each of the tire half portions, but this number may be appropriately determined depending on a length of a groove side of the small holes 41 along the circumferential direction.

In the example of FIG. 4, respectively one small hole is disposed intermittently along the tire circumferential direction, but respectively a group of small holes composed of a plurality of small holes may be disposed intermittently as well.

It is preferable that a value obtained by dividing a spacing L in the tire circumferential direction of ones of the small holes 41 adjacent in the tire circumferential direction by a pattern pitch length in the tire circumferential direction is 0.15 or more and 0.5 or less. If 0.15 or more, it is possible to appropriately maintain the spacing of the recesses in the tire circumferential direction and to further improve the steering stability, and if 0.5 or less, it is possible to sufficiently improve the heat dissipation performance of the small holes 41.

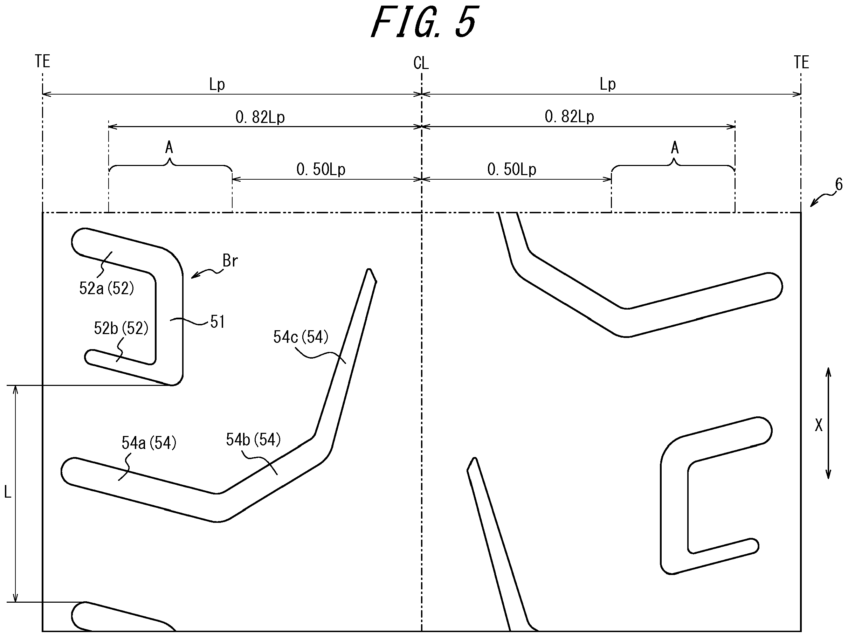

FIG. 5 illustrates a partial developed view of the tread surface of the motorcycle pneumatic tire, which is not according to the present invention, but which is useful for understanding the present invention. The tire of the embodiment as illustrated in FIG. 5 has the tire structure as illustrated in FIG. 1 as well. In the embodiment as illustrated in FIG. 5, patterns line-symmetrical with respect to a equatorial plane CL are arranged in a manner displaced from each other in a tire circumferential direction X on one side and the other side of a tread surface 6 divided by the tire equatorial plane CL. Therefore, the configuration of the tread surface 6 of this embodiment is described here with a tire half portion on the left side toward the page as an example.

First, in the embodiment as illustrated in FIG. 5, when a tire widthwise region on the tread surface 6 partitioned by a tire widthwise position on the tread surface spaced, from the tire equatorial plane CL toward a tread edge TE side, by 50% of a half width Lp of a peripheral length of the tread surface along the periphery of the tread surface 6, and a tire widthwise position on the tread surface spaced, from the tire equatorial plane CL toward a tread edge TE side, by 82% of the half width is defined as an intermediate region A, the intermediate region A has a plurality of branched grooves Br intermittent along the tire circumferential direction on both tire half portions, each of the branched grooves Br comprising at least one circumferential groove 51 (one circumferential groove 51 in the illustrated example) and at least one lateral groove 52 (two lateral grooves 52a, 52b in illustrated example). More specifically, the circumferential grooves 51 respectively comprise in the intermediate region A circumferential groove portions extending in a manner inclined with respect to the tire circumferential direction at an angle of 30° or less. The lateral grooves 52a, 52b respectively comprise in the intermediate region A lateral groove portions extending in a manner inclined with respect to the tire width direction at an angle of 30° or less, and are connected to the circumferential grooves 51 in the intermediate region A.

Note that in the branched grooves Br in the embodiment as illustrated in FIG. 5, each of the lateral grooves 52a extends from one end of each of the circumferential grooves 51 toward a tire widthwise outer side, the lateral groove 52b extends in the same direction from the other end of the circumferential groove 51, and both the lateral grooves 52a, 52b extend to a tire widthwise side outer than the tire widthwise outer end of the intermediate region A.

Note that the circumferential grooves 51 in the embodiment as illustrated in FIG. 5 are linear and extend along the tire circumferential direction, but the circumferential grooves 51 may also be of a bent shape, a curved shape, etc., or extend in a manner inclined with respect to the tire circumferential direction at an angle of 30° or less. Moreover, the lateral grooves 52a, 52b in the present embodiment are linear, have the same length, and extend in a manner inclined with respect to the tire width direction, but the lateral grooves 52a, 52b may also be of a bent shape, a curved shape, etc., or extend along the tire width direction.

Moreover, on the tread surface 6, other than the branched grooves Br, lug grooves 54 are formed alternately with the branched grooves Br spanning the tire circumferential direction. These lug grooves 54 have both ends terminating in the tread surface 6, and are constituted by connecting linear groove portions 54a, 54b, 54c with respectively different inclination angles with respect to the inclination angles with respect to the tire width direction. In other words, each of the lug grooves 54 extends with two positions bent. Note that the lug grooves 54 are grooves with a groove depth larger than the aforementioned circumferential grooves 51.

In this way, in the tire of the embodiment as illustrated in FIG. 5, branched grooves Br each composed of at least one circumferential groove 51 and at least one lateral groove 52 are formed on both tire half portions intermittently along the tire circumferential direction, the circumferential grooves 51 respectively including in the intermediate regions A the circumferential groove portions extending in a manner inclined with respect to the tire circumferential direction at an angle of 30° or less, the lateral grooves 52 respectively being connected to the circumferential grooves 51 in the intermediate regions A and including in the intermediate regions A the lateral groove portions extending in a manner inclined with respect to the tire width direction at an angle of 30° or less.

By disposing such branched grooves Br in the intermediate regions A, a groove surface area of intermediate regions A, which are in the vicinity of the contact edges TE and have largest heat dissipation during vehicle running, is enlarged, which enables dissipation of heat generated inside the tire and decrease of the temperature inside the tire in the vicinity of the contact edges TE. Furthermore, by increasing the groove area within the intermediate regions A, the volume of the rubber itself, which is a factor of heat dissipation, is decreased, which enables reduction of the heat dissipation itself. Therefore, it is possible to decrease the temperature inside the tire in the vicinity of the tread edges TE. As a result, it is possible to suppress occurrence of failure at belt edges and ply edges, and to improve the durability of the tire.

However, in the case where the grooves disposed in the intermediate regions A terminate in the intermediate regions A, air incorporated into the grooves during vehicle running is enclosed between the tread surface and the road surface, resulting in a pattern noise. More specifically, in particular, even if the vehicle body is inclined greatly during heavy-load running, the tread surface 6 tends to contact the ground only at the positions spaced, from the tire equator to the tread edge sides, by 82% of the half width Lp of the peripheral length of the tread surface 6 along the periphery of the tread surface 6, namely, the vicinity of the tire widthwise outer end positions of the intermediate regions A. Then, in the tire according to the embodiment as illustrated in FIG. 5, since the tire widthwise ends of the lateral grooves 52 arranged in the intermediate regions A extend to the tire widthwise sides outer than the tire widthwise outer ends of the intermediate regions A, namely, the tire widthwise sides outer than the contact edges, the air incorporated into the circumferential grooves 51 and the lateral grooves 52 can escape to the outside via the lateral grooves 52. Note that it is more preferable that the tire widthwise ends of the lateral grooves 52 extend to tire widthwise sides outer than positions spaced, from the tire equator to the tread edge sides, . These positions spaced by 86% are equal to contact edges in the case where the vehicle body is inclined at a maximum degree during heavy-load running, and by extending the lateral grooves 52 to the tire widthwise sides outer than such positions, it is possible to obtain the aforementioned effect of the lateral grooves 52 more securely.

As mentioned above, the configuration according to the embodiment as illustrated in FIG. 5 is capable of decreasing the temperature inside the tire in the vicinity of the tread edges and thereby improving the durability of the tire, while maintaining the noise performance.

Note that in the embodiment as illustrated in FIG. 5, from the viewpoint of obtaining sufficient heat dissipation effect due to the branched grooves Br, it is preferable that the groove depths of the circumferential grooves 51 and the lateral grooves 52 constituting the branched grooves Br are 2 mm or more and 8 mm or less.

If 2 mm or more, it is possible to obtain sufficient heat dissipation effect, and if 8 mm or less, it is possible to maintain the steering stability.

In the embodiment as illustrated in FIG. 5, from the viewpoint of sufficiently reducing the pattern noise, it is preferable that a tire widthwise length along the periphery of the tread surface 6 between one of the tire widthwise outer ends of the intermediate regions A and a tire widthwise outer end of at least one of the lateral grooves 52 is 15 mm or more.

In the embodiment as illustrated in FIG. 5, by disposing the aforementioned lug grooves 54, it is possible to improve the traction performance of the tire. From the viewpoint of sufficiently improving the traction performance, it is preferable that a groove depth of the lug grooves 54 is 4 mm or more and 8 mm or less.

In the tire according to the embodiment as illustrated in FIG. 5, it is preferable that a tire widthwise length of the lateral grooves 52 along the periphery of the tread surface 6 is 8% or more and 30% or less of the half width of the peripheral length of the tread surface 6.

If 8% or more, it is possible to further improve the durability of the tire while maintaining the noise performance more securely, and if 30% or less, it is possible to maintain the steering stability more securely.

In the tire according to the embodiment as illustrated in FIG. 5, it is preferable that a tire circumferential length of the circumferential grooves 51 along the periphery of the tread surface 6 is 20 mm or more and 80 mm or less.

If 20 mm or more, it is possible to sufficiently obtain the heat dissipation effect due to the circumferential grooves 51, and if 80 mm or less, it is possible to suppress occurrence of cracks on groove bottoms of the circumferential grooves 51.

In the tire according to the embodiment as illustrated in FIG. 5, it is preferable that a value obtained by dividing a spacing L between ones of the branched grooves Br adjacent in the tire circumferential direction by a pattern pitch length in the tire circumferential direction is 0.15 or more and 0.8 or less.

If 0.15 or more, it is possible to further improve the heat dissipation effect due to the branched grooves Br, and if 0.8 or less, it is possible to maintain the steering stability of the tire more securely.

In the tire according to the embodiment as illustrated in FIG. 5, it is preferable that a negative ratio in tire widthwise regions partitioned by the tread edges TE and the tire widthwise positions spaced, from the tire equatorial plane CL toward the tread edge TE sides, by 50% of the half width of the peripheral length of the tread surface 6 along the periphery of the tread surface 6 is 15% or more and 35% or less.

If 15% or more, it is possible to obtain sufficient heat dissipation effect and to further improve the durability of the tire, and if 35% or less, it is possible to maintain the steering stability more securely.

Note that the "negative ratio" in this paragraph refers to the ratio of the groove area within the tire widthwise regions to the area of the tread surface partitioned by the tread edges and the tire widthwise positions spaced, from the tire equatorial plane toward the tread edge sides, by 50% of the half width of the peripheral length of the tread surface along the periphery of the tread surface {(groove area / tread area) × 100 (%)}.

In the tire according to the embodiment as illustrated in FIG. 5, it is preferable that the number of the branched grooves Br formed on the tread surface 6 is 20 or more and 60 or less.

If 20 or more, it is possible to obtain more sufficient heat dissipation effect due to the branched grooves Br and to further improve the durability of the tire, and if 60 or less, it is possible to maintain the steering stability more securely. Note that the number of the branched grooves Br may be appropriately determined within, e.g., the aforementioned range of 20 to 60, depending on the length of the aforementioned circumferential grooves 51.

Note that as described above, each of the branched grooves Br in the embodiment as illustrated in FIG. 5 is a U-shaped groove including two lateral grooves 52a, 52b extending from both ends of the circumferential groove 51 toward the tire widthwise outer side. According to this configuration, it is possible to further improve the durability of the tire while maintaining the steering stability and the noise performance of the tire more securely, but in the tire according to this disclosure, the branched grooves Br may have another configuration as well.

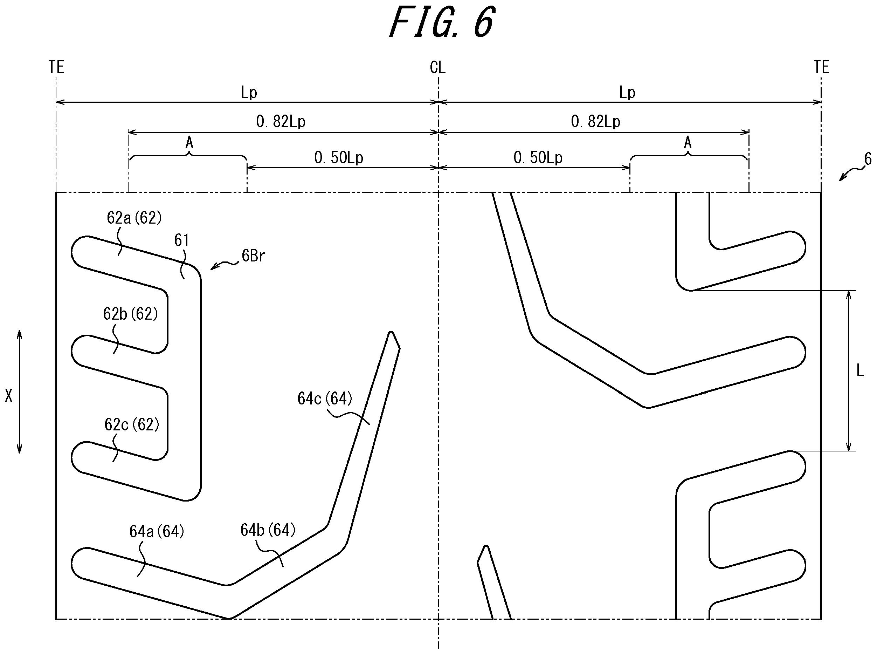

FIG. 6 is a partial developed view of a tread surface of a motorcycle pneumatic tire, which is not according to the present invention, but which is useful for understanding the present invention. In the tire illustrated in FIG. 6, each branched groove 6Br may be respectively composed of one circumferential groove 61 and three lateral grooves 62a, 62b, 62c respectively extending from both ends of the circumferential groove 61 and a position between the ends toward a tire widthwise outer side.

### EXAMPLES

Hereinafter, examples for this disclosure are described without being limited thereto.

### <Example 1>

The tires of the examples and the comparative examples (each with a tire size of 180/60R16M/C) were experimentally manufactured according to the specs in Table 1, and the durability, the steering stability and the uneven wear resistance of the tires were evaluated. Note that in the Examples 5 and 12 in Table 1, since the circumferential grooves 21 and the small holes 41 are arranged overlapping each other in the tire circumferential direction, the "spacing L between circumferential grooves 21, width direction grooves 31 or small holes 41 / pattern pitch" in the table is indicated as 0.

Each sample tire includes a pair of sidewall portions on tire radial outer sides of a pair of bead portions and a tread portion spanning between the sidewall portions, with a carcass spanning between the bead portions as a skeleton. More specifically, each includes a carcass composed of two plies having nylon cords, and includes two belt layers obtained by coating aramid cords with a rubber on a tire radial outer side of the carcass and one belt layer obtained by coating nylon cords with a rubber on a tire radial outer side thereof. Cord angles of the carcass plies with respect to the tire width direction is 15°, cord angles of each belt layer with respect to the tire circumferential direction is 15°, and the cords of the two belt layers composed of aramid cords respectively cross the cords of the other layer.

Each sample tire was mounted to an applicable rim (MT5.00-16M/C), filled with an internal pressure of 280 kPa, applied with a STEP load, and was run at a speed for hour of 81 km on a testing drum.

The durability of the tire was evaluated with a load at which cracks occurred in the aforementioned test.

The steering stability of the tires were evaluated via subjective evaluation after test running by a professional test driver.

The uneven wear resistance of the tires was evaluated via a wear amount after running 2000 km.

**[Table 1]**

| | Circumferential grooves 21, width direction grooves 31, small holes 41 | | | | | | | Negative ratio | Spacing L between circumferential grooves 21, width direction grooves 31 or small holes 41 / pattern pitch | Durability of tire (INDEX) | Steering stability (INDEX) | Wear resistance (INDEX) |
|---|---|---|---|---|---|---|---|---|---|---|---|---|
| | Pattern | Tire widthwise positions of widthwise centers of recesses from tire equatorial plane (%) | Circumferential length (mm) | Widthwise length (mm) | Depth (mm) | Angle with respect to tire circumferential direction (°) | Number in each tire half portion | | | | | |
| Comparative Example 1-1 | - | - | - | - | - | - | - | 12 | - | 100 | 100 | 100 |
| Example 1-1 | FIG. 2 | 66 | 20 | 10 | 4 | 0 | 8 | 13 | 1.84 | 101 | 100 | 98 |
| Example 1-2 | FIG. 2 | 66 | 20 | 10 | 4 | 0 | 20 | 16 | 0.64 | 105 | 95 | 95 |
| Example 1-3 | FIG. 2 | 66 | 20 | 10 | 4 | 0 | 32 | 20 | 0.34 | 110 | 90 | 90 |
| Example 1-4 | FIG. 2 | 66 | 20 | 10 | 4 | 0 | 96 | 36 | 0.20 | 138 | 70 | 73 |
| Example 1-5 | FIG. 2 | 66 | 20 | 10 | 4 | 0 | 144 | 49 | 0 | 173 | 60 | 60 |
| Example 1-6 | FIG. 2 | 66 | 20 | 10 | 4 | 30 | 32 | 20 | 0.35 | 110 | 90 | 90 |
| Example 1-7 | FIG. 3 | 66 | 10 | 20 | 4 | 90 | 32 | 20 | 0.41 | 110 | 90 | 90 |
| Example 1-8 | FIG. 4 | 66 | 16 | 16 | 4 | 0 | 8 | 14 | 1.87 | 102 | 100 | 98 |
| Example 1-9 | FIG. 4 | 66 | 16 | 16 | 4 | 0 | 20 | 17 | 0.67 | 106 | 95 | 95 |
| Example 1-10 | FIG. 4 | 66 | 16 | 16 | 4 | 0 | 32 | 20 | 0.37 | 110 | 90 | 90 |
| Example 1-11 | FIG. 4 | 66 | 16 | 16 | 4 | 0 | 96 | 42 | 0.04 | 152 | 70 | 65 |
| Example 1-12 | FIG. 4 | 66 | 16 | 16 | 4 | 0 | 144 | 49 | 0 | 173 | 58 | 60 |
| Example 1-13 | FIG. 4 | 66 | 20 | 20 | 4 | 0 | 32 | 24 | 0.34 | 116 | 85 | 85 |

The results in Table 1 are indexed with each result of the tire of Comparative Example 1-1 as 100. In each evaluation result, a larger index indicates excellent performance.

### <Example 2>

The tires of the examples and the comparative examples (each with a tire size of 180/60R16M/C) were experimentally manufactured according to the specs in Table 2, and the durability, the noise performance and the steering stability of the tires were evaluated.

Each sample tire includes a pair of sidewall portions on tire radial outer sides of a pair of bead portions and a tread portion spanning between the sidewall portions, with a carcass spanning between the bead portions as a skeleton. More specifically, each includes a carcass composed of two plies having nylon cords, and includes two belt layers obtained by coating aramid cords with a rubber on a tire radial outer side of the carcass and one belt layer obtained by coating nylon cords with a rubber on a tire radial outer side thereof. Cord angles of the carcass plies with respect to the tire width direction is 15°, cord angles of each belt layer with respect to the tire circumferential direction is 15°, and the cords of the two belt layers composed of aramid cords respectively cross the cords of the other layer.

Each sample tire was mounted to an applicable rim (MT5.00-16M/C), filled with an internal pressure of 280 kPa, applied with a STEP load, and was run at a speed for hour of 81 km on a testing drum.

The durability of the tire was evaluated with a load at which cracks occurred in the aforementioned test.

The noise performance and the steering stability of the tires were evaluated via subjective evaluation after test running by a professional test driver.

Note that each length indicated in Table 2 is a length along the periphery of the tread surface 6.

The "length (mm) of tire widthwise outer ends of lateral grooves" in Table 2 is a tire widthwise length of the ends of the lateral grooves 52 extending to the tire widthwise sides outer than the intermediate regions A.

Moreover, the "tire widthwise length (%) of lateral grooves" is a ratio of a length of the tread surfaces 6 of the lateral grooves 52 to the half width Lp of the peripheral length of the tread surface 6.

Moreover, the "negative ratio (%)" indicates the negative ratio in the tire widthwise regions partitioned by the tread edges TE and the tire widthwise positions on the tread surface spaced, from the tire equatorial plane CL toward the tread edge TE sides, by 50% of the half width Lp of the peripheral length of the tread surface 6 along the periphery of the tread surface 6.

**[Table 2]**

| | Branched grooves | | | | | | Negative ratio (%) | Length L between branched grooves / pattern pitch | Durability of tire (INDEX) | Noise performance (INDEX) | Steering stability (INDEX) |
|---|---|---|---|---|---|---|---|---|---|---|---|
| | Pattern | Length of tire widthwise outer ends of lateral grooves (mm) | Circumferential length of circumferential grooves (mm) | Widthwise length of lateral grooves (%) | Depth (mm) | Number | | | | | |
| Comparative Example 2-1 | - | - | - | - | - | - | 8 | - | 100 | 100 | 100 |
| Comparative Example 2-2 | FIG. 2 | 0 | 40 | 5 | 4 | 34 | 13 | 0.65 | 122 | 80 | 100 |
| Example 2-1 | FIG. 2 | 4 | 40 | 10 | 4 | 34 | 14 | 0.65 | 123 | 85 | 100 |
| Example 2-2 | FIG. 2 | 21 | 40 | 25 | 4 | 34 | 18 | 0.65 | 130 | 97 | 100 |
| Example 2-3 | FIG. 2 | 21 | 15 | 25 | 4 | 34 | 13 | 0.87 | 122 | 95 | 100 |
| Example 2-4 | FIG. 2 | 21 | 50 | 25 | 4 | 34 | 19 | 0.56 | 132 | 95 | 100 |
| Example 2-5 | FIG. 2 | 21 | 60 | 25 | 4 | 34 | 20 | 0.48 | 133 | 95 | 100 |
| Example 2-6 | FIG. 2 | 21 | 80 | 25 | 4 | 34 | 23 | 0.30 | 138 | 95 | 100 |
| Example 2-7 | FIG. 2 | 21 | 90 | 25 | 4 | 34 | 24 | 0.21 | 140 | 95 | 100 |
| Example 2-8 | FIG. 2 | 0 | 30 | 5 | 4 | 34 | 12 | 0.74 | 120 | 80 | 100 |
| Example 2-9 | FIG. 2 | 1 | 40 | 8 | 4 | 34 | 13 | 0.65 | 122 | 85 | 100 |
| Example 2-10 | FIG. 2 | 21 | 55 | 25 | 4 | 34 | 20 | 0.52 | 133 | 95 | 100 |
| Example 2-11 | FIG. 2 | 27 | 55 | 30 | 4 | 34 | 21 | 0.52 | 135 | 95 | 100 |
| Example 2-12 | FIG. 2 | 40 | 55 | 35 | 4 | 34 | 24 | 0.52 | 140 | 95 | 90 |
| Example 2-13 | FIG. 2 | 21 | 55 | 25 | 1 | 34 | 20 | 0.52 | 102 | 99 | 100 |
| Example 2-14 | FIG. 2 | 21 | 60 | 25 | 4 | 34 | 20 | 0.48 | 133 | 95 | 100 |
| Example 2-15 | FIG. 2 | 21 | 60 | 25 | 8 | 34 | 20 | 0.48 | 167 | 90 | 95 |
| Example 2-16 | FIG. 2 | 21 | 60 | 25 | 10 | 34 | 20 | 0.48 | 183 | 85 | 85 |
| Example 2-17 | FIG. 3 | 21 | 65 | 25 | 4 | 34 | 21 | 0.43 | 135 | 95 | 100 |

The results in Table 2 are indexed with each result of the tire of Comparative Example 2-1 as 100. A larger index indicates excellent performance.

### REFERENCE SIGNS LIST

- 3: inclined belt
- 3a, 3b: inclined belt layer
- 5: carcass
- 6: tread surface
- 7: applicable rim
- 21: circumferential groove
- 31: width direction groove
- 41: small hole
- 21 a, 22b: lug groove
- 51: circumferential groove
- 52, 52a, 52b: lateral groove
- 54: lug groove
- 54a, 54b, 54c: groove portion
- Br: branched groove
- 61: circumferential groove
- 62, 62a, 62b, 62c: lateral groove
- 64: lug groove
- 64a, 64b, 64c: groove portion
- 6Br: branched groove
- A: intermediate region
- CL: tire equatorial plain
- L: tire circumferential spacing between recesses
- TE: tread edge

## Claims

1. A motorcycle pneumatic tire, wherein:
in a reference state where the tire is mounted to an applicable rim, filled with a prescribed internal pressure without load applied,
when tire widthwise regions on a tread surface (6) partitioned by tire widthwise positions on the tread surface (6) spaced, from a tire equatorial plane (CL) to tread edge sides, by 50% of a half width (Lp) of a peripheral length of the tread surface (6) along a periphery of the tread surface (6), and tire widthwise positions on the tread surface (6) spaced, from a tire equatorial plane (CL) to tread edge sides, by 82% of the half width (Lp) are defined as intermediate regions (A),
the intermediate regions (A) on both tire half portions respectively have recesses (21, 22a, 22b, 31, 41) intermittent along a tire circumferential direction,
a negative ratio in the intermediate regions (A) is 15% or more and 45% or less, **characterized in that**
the recesses (21, 22a, 22b, 31, 41) comprise on both tire half portions respectively:
first grooves (21, 31) or small holes (41) intermittent along a tire circumferential direction, which are formed only in the intermediate regions (A), said small holes being holes (41) with a diameter within a range of 10 mm or more and 20 mm or less; and
lug grooves, comprising first lug grooves (22a) and second lug grooves (22b) alternately formed in the tire circumferential direction, both ends of each of the first and second lug grooves (22a, 22b) terminating within the tread surface (6), the first lug grooves (22a) extending in a manner inclined with respect to the tire width direction with respectively one bent position in the vicinity of their centers in the extension direction, the second lug groove (22b) being composed of a first groove portion (b1) extending in a manner inclined with respect to the tire width direction with two bent positions in the vicinity of their centers, and a second groove portion (b2) being connected to the first groove portion (b1) and extending in a different direction from the first groove portion (b1), wherein the first and second lug grooves (22a, 22b) are grooves with a groove depth larger than the first grooves (21, 31) or small holes (41).

2. The motorcycle pneumatic tire according to claim 1, wherein:
the first grooves or holes are circumferential grooves (21) extending in the tire circumferential direction.

3. The motorcycle pneumatic tire according to claim 2, wherein:
a value obtained by dividing a spacing in the tire circumferential direction of ones of the circumferential grooves (21) adjacent in the tire circumferential direction by a pattern pitch length in the tire circumferential direction is 0.15 or more and 0.5 or less.

4. The motorcycle pneumatic tire according to claim 1, wherein:
the first grooves or holes are width direction (31) grooves extending in the tire width direction.

5. The motorcycle pneumatic tire according to claim 4, wherein:
a value obtained by dividing a spacing in the tire circumferential direction of ones of the width direction grooves (31) adjacent in the tire circumferential direction by a pattern pitch length in the tire circumferential direction is 0.15 or more and 0.5 or less.

6. The motorcycle pneumatic tire according to claim 1, wherein:
a value obtained by dividing a spacing in the tire circumferential direction of ones of the holes (41) adjacent in the tire circumferential direction by a pattern pitch length in the tire circumferential direction is 0.15 or more and 0.5 or less.

## Patentansprüche

1. Motorrad-Luftreifen, wobei:
in einem Referenzzustand, in dem der Reifen an einer zulässigen Felge montiert ist, gefüllt mit einem vorgeschriebenen Innendruck, ohne dass eine Last angewendet wird,
wenn Reifenbreitenbereiche auf einer Lauffläche (6), die durch Reifenbreitenpositionen auf der Lauffläche (6) unterteilt werden, die, von einer Reifenäquatorialebene (CL) zu Laufflächen-Kantenseiten, um 50 % einer halben Breite (Lp) einer Umfangslänge der Lauffläche (6) entlang eines Umfangs der Lauffläche (6) beabstandet sind, und Reifenbreitenpositionen auf der Lauffläche (6), die, von einer Reifenäquatorialebene (CL) zu Laufflächen-Kantenseiten, um 82 % der halben Breite (Lp) beabstandet sind, als Zwischenbereiche (A) definiert sind,
die Zwischenbereiche (A) auf den beiden Reifenhalbabschnitten jeweils Aussparungen (21, 22a, 22b, 31, 41) in Abständen entlang einer Reifenumfangsrichtung aufweisen,
ein negatives Verhältnis in den Zwischenbereichen (A) 15 % oder mehr und 45 % oder weniger beträgt, **dadurch gekennzeichnet, dass**
die Aussparungen (21, 22a, 22b, 31, 41) auf den beiden Reifenhalbabschnitten jeweils Folgendes umfassen:
erste Rillen (21, 31) oder kleine Löcher (41) in Abständen entlang einer Reifenumfangsrichtung, die nur in den Zwischenbereichen (A) geformt sind, wobei die kleinen Löcher Löcher (41) mit einem Durchmesser innerhalb eines Bereichs von 10 mm oder mehr und 20 mm oder weniger sind, und
Stollenrillen, die erste Stollenrillen (22a) und zweite Stollenrillen (22b) umfassen, die abwechselnd in der Reifenumfangsrichtung geformt sind, wobei die beiden Enden sowohl der ersten als auch der zweiten Stollenrillen (22a, 22b) innerhalb der Lauffläche (6) enden, wobei sich die ersten Stollenrillen (22a) auf eine in Bezug auf die Reifenbreitenrichtung geneigte Weise erstrecken, mit jeweils einer gebogenen Position in der Nähe ihrer Mitten in der Ausdehnungsrichtung, wobei die zweiten Stollenrillen (22b) aus einem ersten Rillenabschnitt (b1), der sich auf eine in Bezug auf die Reifenbreitenrichtung geneigte Weise erstreckt, mit jeweils zwei gebogenen Positionen in der Nähe ihrer Mitten, und einem zweiten Rillenabschnitt (b2), der mit dem ersten Rillenabschnitt (b1) verbunden ist und sich in einer anderen Richtung von dem ersten Rillenabschnitt (b1) erstreckt, wobei die ersten und die zweiten Stollenrillen (22a, 22b) Rillen mit einer größeren Rillentiefe als die ersten Rillen (21, 31) oder die kleinen Löcher (41) sind.

2. Motorrad-Luftreifen nach Anspruch 1, wobei:
die ersten Rillen oder Löcher umlaufende Rillen (21) sind, die sich in der Reifenumfangsrichtung erstrecken.

3. Motorrad-Luftreifen nach Anspruch 2, wobei:
ein Wert, erhalten durch Dividieren eines Abstandes in der Reifenumfangsrichtung von in der Reifenumfangsrichtung benachbarten der umlaufenden Rillen (21) durch eine Musterteilungslänge in der Reifenumfangsrichtung, 0,15 oder mehr und 0,5 oder weniger beträgt.

4. Motorrad-Luftreifen nach Anspruch 1, wobei:
die ersten Rillen oder Löcher Breitenrichtungsrillen (31) sind, die sich in der Reifenbreitenrichtung erstrecken.

5. Motorrad-Luftreifen nach Anspruch 4, wobei:
ein Wert, erhalten durch Dividieren eines Abstandes in der Reifenumfangsrichtung von in der Reifenumfangsrichtung benachbarten der Breitenrichtungsrillen (31) durch eine Musterteilungslänge in der Reifenumfangsrichtung, 0,15 oder mehr und 0,5 oder weniger beträgt.

6. Motorrad-Luftreifen nach Anspruch 1, wobei:
ein Wert, erhalten durch Dividieren eines Abstandes in der Reifenumfangsrichtung von in der Reifenumfangsrichtung benachbarten der Löcher (41) durch eine Musterteilungslänge in der Reifenumfangsrichtung, 0,15 oder mehr und 0,5 oder weniger beträgt.

## Revendications

1. Bandage pneumatique pour motocycle, dans lequel :
dans un état de référence, dans lequel le bandage pneumatique est monté sur une jante applicable, rempli à une pression interne prescrite, sans application de charge ;
lorsque des régions dans le sens de la largeur du bandage pneumatique, sur une surface de bande de roulement (6), séparée par des positions sur la surface de bande de roulement (6), espacés d'un plan équatorial du bandage pneumatique (CL) vers des côtés de bordure de la bande de roulement, de 50% d'une demi-largeur (Lp) d'une longueur périphérique de la surface de bande de roulement (6), le long d'une périphérie de la surface de bande de roulement (6), et des positions dans le sens de la largeur du bandage pneumatique sur la surface de bande de roulement (6), espacées, d'un plan équatorial du bandage pneumatique (CL) vers des côtés de bordure de la bande de roulement, de 82% de la demi-largeur (Lp), sont définies comme régions intermédiaires (A) ;
les régions intermédiaires (A) sur les deux demi-parties du bandage pneumatique, comportent respectivement des évidements (21, 22a, 22b, 22b, 31, 41) intermittents le long d'une direction circonférentielle du bandage pneumatique ;
un rapport négatif dans les régions intermédiaires (A) correspond à 15% ou plus et à 45% ou moins ; **caractérisé en ce que** :
les évidements (21, 22a, 22b, 31, 41) comprennent respectivement sur les deux de demi-parties du bandage pneumatique :
des premières rainures (21, 31) ou des petits trous (41) intermittentes le long d'une direction circonférentielle du bandage pneumatique, formées uniquement dans les régions intermédiaires (A), lesdits petits trous étant des trous (41) ayant un diamètre compris dans un intervalle allant de 10 mm ou plus à 20 mm ou moins ; et
des rainures à barrettes, comprenant des premières rainures à barrettes (22a) et des deuxièmes rainures à barrettes (22b) formées par alternance dans la direction circonférentielle du bandage pneumatique, les deux extrémités de chacune des premières et deuxièmes rainures à barrettes (22a, 22b) se terminant dans la surface de bande de roulement (6), les premières rainures à barrettes (22a) s'étendant d'une manière inclinée par rapport à la direction de la largeur du bandage pneumatique, et comportant respectivement une position fléchie au voisinage de leurs centres dans la direction d'extension, les deuxièmes rainures à barrettes (22b) étant composées d'une première partie de rainure (b1) s'étendant d'une manière inclinée par rapport à la direction de la largeur du bandage pneumatique, avec deux parties fléchies au voisinage de leurs centres, et une deuxième partie de rainure (b2) connectée à la première partie de rainure (b1) et s'étendant dans une direction différente de celle de la première partie de rainure (b1), dans lequel les premières et deuxièmes rainures à barrettes (22a, 22b) sont des rainures ayant une profondeur de rainure supérieure à celle des premières rainures (21, 31) ou des petits trous (41).

2. Bandage pneumatique pour motocycle selon la revendication 1, dans lequel :
les premières rainures ou les trous sont des rainures circonférentielles (21) s'étendant dans la direction circonférentielle du bandage pneumatique.

3. Bandage pneumatique pour motocycle selon la revendication 2, dans lequel :
une valeur obtenue en divisant un espacement, dans la direction circonférentielle du bandage pneumatique, de certaines des rainures circonférentielles (21) adjacentes dans la direction circonférentielle du bandage pneumatique par une longueur de pas de sculpture, dans la direction circonférentielle du bandage pneumatique, correspond à 0,15 ou plus et à 0,5 ou moins.

4. Bandage pneumatique pour motocycle selon la revendication 1, dans lequel :
les premières rainures ou trous sont des rainures dans la direction de la largeur (31) s'étendant dans la direction de la largeur du bandage pneumatique.

5. Bandage pneumatique pour motocycle selon la revendication 4, dans lequel :
une valeur obtenue en divisant un espacement, dans la direction circonférentielle du bandage pneumatique, de certaines des rainures dans la direction de la largeur (31) adjacentes dans la direction circonférentielle du bandage pneumatique par une longueur de pas de sculpture, dans la direction circonférentielle du bandage pneumatique, correspond à 0,15 ou plus et 0,5 ou moins.

6. Bandage pneumatique selon la revendication 1, dans lequel :
une valeur obtenue en divisant un espacement, dans la direction circonférentielle du bandage pneumatique, de certains des trous (41) adjacents dans la direction circonférentielle du bandage pneumatique, par une longueur de pas de sculpture, dans la direction circonférentielle du bandage pneumatique, correspond à 0,15 ou plus et à 0,5 ou moins.
